# EUROPEAN PATENT SPECIFICATION

(11) **EP 4 206 045 B1**
(45) Date of publication and mention of the grant of the patent: **15.05.2024**
(21) Application number: 20954454.3
(22) Date of filing: 23.09.2020
(51) Int. Cl.: B60T 7/12, B60W 30/06, B60W 30/18

(54) **AUTO HOLD CONTROL METHOD AND SYSTEM FOR MOTOR VEHICLE**
VERFAHREN UND SYSTEM ZUM AUTOMATISCHEN HALTEN EINES FAHRZEUGS
PROCÉDÉ ET SYSTÈME DE COMMANDE DE MAINTIEN AUTOMATIQUE POUR VÉHICULE AUTOMOBILE

(43) Date of publication of application: 05.07.2023
(73) Proprietor: Zhejiang Geely Holding Group Co., Ltd., Hangzhou, Zhejiang 310051 (CN); Ningbo Geely Automobile Research & Development Co. Ltd., Hangzhou Bay New District Ningbo Zhejiang 315336 (CN)
(72) Inventor: JIN, Yuanda, Hangzhou, Zhejiang 310051 (CN); CHEN, Wu, Hangzhou, Zhejiang 310051 (CN); HAN, Mingjia, Hangzhou, Zhejiang 310051 (CN); YAO, Yuan, Hangzhou, Zhejiang 310051 (CN)
(74) Representative: Osterhoff, Utz
(86) International application number: PCT/CN2020/117187
(87) International publication number: WO 2022/061600

(56) References cited:
- CN-A- 105 564 400
- CN-A- 106 627 547
- CN-A- 110 871 789
- CN-A- 111 497 818
- CN-U- 211 223 394
- KR-A- 20180 130 714
- US-A1- 2020 238 959
- US-B2- 7 100 998
- US-B2- 8 412 436

## Description

### FIELD OF THE INVENTION

The present invention relates to the field of vehicle parking technologies, and particularly to an auto hold control method and system.

### BACKGROUND OF THE INVENTION

An auto hold function (i.e., automatic parking function) is an additional function of an electronic stability control (ESC) system which currently improves the driving comfort and driving convenience of a vehicle. Currently, auto hold control of most vehicle models in the market is simple, driving scenarios (such as reversing, uphill driving, downhill driving, or the like) of the vehicle are not distinguished, and the auto hold function is triggered only through a single determination condition. For example, the auto hold function is triggered as soon as it is detected that a brake pedal of the vehicle is depressed until the vehicle is stationary. This way may cause the following inconvenience or danger: (1) when the vehicle stops during uphill driving but a driver does not apply an enough braking force to keep the vehicle stationary, the auto hold function cannot be triggered, and vehicle sliding is caused; (2) in the process of following on a level road or downslope, due to a low enabling threshold, the auto hold function is frequently triggered under frequent braking of the driver, and driving comfort is reduced; (3) the auto hold function is frequently enabled in a parking process, the driver is required to release parking by depressing an accelerator pedal or closing the auto hold function, the operation is inconvenient, and a certain collision risk exists when parking is released by an accelerator in a narrow space. These factors can cause inconvenient use of a user and reduce the user experience.

US 7 100 998 B2 discloses a method and a device for controlling wheel brakes of a vehicle, in which braking force is maintained and/or built up in at least one operating state at at least one wheel of the vehicle irrespective of the extent of pedal actuation. Such an operating state is present when the slope of the road points in the direction of the vehicle's future direction of travel and/or when the parking brake is engaged.

### BRIEF DESCRIPTION OF THE INVENTION

In view of the above problems, the present invention is made to provide an auto hold control method and system which overcome or at least partially solve the above problems.

An object of the present invention is to provide an auto hold control method and system, which can adopt different auto hold strategies according to different driving scenarios to improve the user experience and safety performance.

A further object of the present invention is to conveniently and accurately determine whether an auto hold enabling condition is satisfied according to the vehicle speed and the braking pressure of a vehicle for different driving scenarios.

In particular, according to the present invention, there is provided an auto hold control method, including:
acquiring a road slope, a vehicle speed, a braking pressure and gear information of a vehicle currently being driven;
determining a driving scenario in which the vehicle is currently located according to the acquired road slope and gear information;
determining whether the vehicle meets an auto hold enabling condition according to the determined driving scenario and the acquired vehicle speed and braking pressure, so as to obtain a determination result; and
enabling or disabling the auto hold function of the vehicle according to the determination result, wherein the driving scenarios include reversing, uphill driving, level road driving, and downhill driving;
the determining a driving scenario in which the vehicle is currently located according to the acquired road slope and gear information comprises:
   determining whether the gear information is an R gear;
   if the gear information is the R gear, determining that the driving scenario in which the vehicle is currently located is reversing; and
   if the gear information is not the R gear, determining whether the driving scenario in which the vehicle is currently located is uphill driving, level road driving or downhill driving according to the road slope, wherein
   the determining whether the vehicle meets an auto hold enabling condition according to the determined driving scenario and the acquired vehicle speed and braking pressure, so as to obtain a determination result comprises:
      when the determined driving scenario is reversing, directly determining that the vehicle does not meet the auto hold enabling condition as the determination result;
      when the determined driving scenario is uphill driving, determining whether the vehicle speed is less than a preset vehicle speed threshold, and if yes, determining that the vehicle meets the auto hold enabling condition as the determination result;
      when the determined driving scenario is level road driving, determining whether the vehicle speed is less than the preset vehicle speed threshold and whether the braking pressure is greater than a first preset threshold, and if yes, determining that the vehicle meets the auto hold enabling condition as the determination result; and
      when the determined driving scenario is downhill driving, determining whether the vehicle speed is less than the preset vehicle speed threshold and whether the braking pressure is greater than a second preset threshold, and if yes, determining that the vehicle meets the auto hold enabling condition as the determination result, the second preset threshold being greater than the first preset threshold, wherein
      the enabling or disabling the auto hold function of the vehicle according to the determination result includes:
         if the determination result is that the vehicle does not meet the auto hold enabling condition, disabling the auto hold function of the vehicle; and
         if the determination result is that the vehicle meets the auto hold enabling condition, enabling the auto hold function of the vehicle.

Optionally, acquiring the road slope of the vehicle currently being driven includes:
acquiring a current driving torque and a current longitudinal acceleration of the vehicle, and calculating the road slope of the vehicle currently being driven according to the driving torque and the longitudinal acceleration;
   or,
sensing the road slope of the vehicle currently being driven by a slope sensor.

Optionally, acquiring the vehicle speed of the vehicle currently being driven includes: acquiring a current longitudinal acceleration of the vehicle and wheel speed information of each wheel, and calculating the vehicle speed of the vehicle currently being driven according to the longitudinal acceleration and the wheel speed information of each wheel.

Optionally, acquiring the braking pressure of the vehicle currently being driven includes: sensing the braking pressure of the vehicle currently being driven by a hydraulic sensor provided at a brake pedal of the vehicle.

According to another aspect of the present invention, there is further provided an auto hold control system, including:
a road slope acquiring unit configured to acquire a road slope of a vehicle currently being driven;
a vehicle speed acquiring unit configured to acquire a vehicle speed of the vehicle currently being driven;
a braking pressure acquiring unit configured to acquire a braking pressure of the vehicle currently being driven;
a gear information acquiring unit configured to acquire gear information of the vehicle currently being driven;
a parking control module connected with the road slope acquiring unit, the vehicle speed acquiring unit, the braking pressure acquiring unit and the gear information acquiring unit, and configured to determine a driving scenario in which the vehicle is currently located according to the acquired road slope and gear information, determine whether the vehicle meets an auto hold enabling condition according to the determined driving scenario and the acquired vehicle speed and braking pressure, so as to obtain a determination result, and generate a corresponding control signal according to the determination result; and
an execution unit connected with the parking control module and configured to enable or disable the auto hold function of the vehicle according to the corresponding control signal, wherein
the driving scenarios include reversing, uphill driving, level road parking, and downhill driving;
the parking control module is further configured to:
   determine whether the gear information is an R gear;
   if the gear information is the R gear, determine that the driving scenario in which the vehicle is currently located is reversing; and
   if the gear information is not the R gear, determine whether the driving scenario in which the vehicle is currently located is uphill driving, level road driving or downhill driving according to the road slope, wherein
   the corresponding control signal includes one of a first control signal indicating enabling of the auto hold function and a second control signal indicating disabling of the auto hold function; the parking control module is further configured to:
      when the determined driving scenario is reversing, directly determine that the vehicle does not meet the auto hold enabling condition, and generate the second control signal;
      when the determined driving scenario is uphill driving, determine whether the vehicle speed is less than a preset vehicle speed threshold, and if yes, determine that the vehicle meets the auto hold enabling condition, and generate the first control signal;
      when the determined driving scenario is level road driving, determine whether the vehicle speed is less than the preset vehicle speed threshold and whether the braking pressure is greater than a first preset threshold, and if yes, determine that the vehicle meets the auto hold enabling condition, and generate the first control signal; and
      when the determined driving scenario is downhill driving, determine whether the vehicle speed is less than the preset vehicle speed threshold and whether the braking pressure is greater than a second preset threshold, and if yes, determine that the vehicle meets the auto hold enabling condition, and generate the first control signal, the second preset threshold being greater than the first preset threshold;
      the execution unit is further configured to:
         disable the auto hold function of the vehicle according to the second control signal; or
         enable the auto hold function of the vehicle according to the first control signal.

Optionally, the road slope acquiring unit includes:
a torque sensor configured to acquire a current driving torque of the vehicle;
a first acceleration sensor configured to acquire a current longitudinal acceleration of the vehicle; and
a first calculator configured to calculate the road slope of the vehicle currently being driven according to the acquired driving torque and longitudinal acceleration.

Optionally, the road slope acquiring unit is a slope sensor configured to sense the road slope of the vehicle currently being driven.

Optionally, the vehicle speed acquiring unit includes:
a second acceleration sensor configured to acquire the current longitudinal acceleration of the vehicle;
a wheel speed sensor configured to acquire current wheel speed information of each wheel of the vehicle; and
a second calculator configured to calculate the vehicle speed of the vehicle currently being driven according to the acquired longitudinal acceleration and wheel speed information of each wheel.

Optionally, the braking pressure acquiring unit is a hydraulic sensor;
the hydraulic sensor is provided on a brake pedal of the vehicle and configured to sense the braking pressure of the vehicle currently being driven.

Optionally, the execution unit is a hydraulic execution unit integrated in the parking control module.

In the auto hold control method and system according to the present invention, current driving condition information of the vehicle (i.e., the road slope, the vehicle speed, the braking pressure and the gear information of the vehicle currently being driven) is obtained, the driving scenario in which the vehicle is currently located is determined according to the road slope and the gear information, and then, whether the vehicle meets the auto hold enabling condition is determined according to the determined driving scenario and the acquired vehicle speed and braking pressure, such that the auto hold function of the vehicle is enabled or disabled accordingly. In the solution of the present invention, different auto hold strategies can be used according to different driving scenarios, and therefore, the requirements of users in different driving scenarios (use scenarios) are met, thereby improving the user experience and safety performance.

Further, after the driving scenario of the vehicle is determined, for different driving scenarios, whether the auto hold enabling condition is met is conveniently and accurately determined according to the vehicle speed and the braking pressure of the vehicle, thereby improving the efficiency and accuracy of auto hold control, and further improving the user experience and safety performance.

The foregoing description merely briefly describes the technical solution of the present invention. To more clearly understand the technical means of the present invention, implement the technical means of the present invention according to content of the specification, and make the foregoing and other objectives, characteristics and advantages of the present invention more comprehensible, particular embodiments of the present invention are described below.

According to the following detailed description of specific embodiments of the present invention in conjunction with drawings, those skilled in the art will better understand the aforementioned and other objects, advantages and features of the present invention.

### BRIEF DESCRIPTION OF THE DRAWINGS

Some specific embodiments of the present invention will be described below in detail in an exemplary rather than restrictive manner with reference to the drawings. Identical reference numerals in the drawings represent identical or similar components or parts. Those skilled in the art should understand that these drawings are not necessarily drawn to scale. In the drawings:
Fig. 1 is a schematic flow diagram of an auto hold control method according to an embodiment of the present invention;
Fig. 2 is a schematic diagram of a step of determining a driving scenario in which a vehicle is currently located according to an acquired road slope and gear information according to an embodiment of the present invention;
Fig. 3 is a schematic structural diagram of an auto hold control system according to an embodiment of the present invention;
Fig. 4 is a schematic structural diagram of an auto hold control system according to another embodiment of the present invention;
Fig. 5 is a schematic structural diagram of an auto hold control system according to still another embodiment of the present invention; and
Fig. 6 is a schematic structural diagram of an auto hold control system according to yet another embodiment of the present invention.

### DETAILED DESCRIPTION

Exemplary embodiments of the present invention will be described in more detail below with reference to the accompanying drawings. While exemplary embodiments of the present invention are shown in the drawings, it should be understood that the present invention may be embodied in various forms and should not be limited by the embodiments set forth herein. Rather, these embodiments are provided such that this invention will be thoroughly understood, and will fully convey the scope of the invention to those skilled in the art.

Currently, determination of a use scenario (or called driving scenario) of a user (or called driver) is lacked in triggering of the auto hold function of most vehicle models in the market, such that an enabling condition of the auto hold function cannot be adjusted according to different use scenarios, and therefore, use of the user is inconvenient, an experience feeling is poor, and a safety risk exists.

The inventor of the present application creatively found in research that, based on a currently widely used electronic stability control (ESC) system and big data analysis of driving habits of drivers, in combination with a driving environment (such as a road slope) and driving data (such as a vehicle speed, a gear, or the like) of the vehicle, a driving intention of the driver can be determined such that the use scenario of the vehicle is determined, and then, different kinds of auto hold triggering logic can be adopted according to different use scenarios of the vehicle, thus effectively solving the above problem.

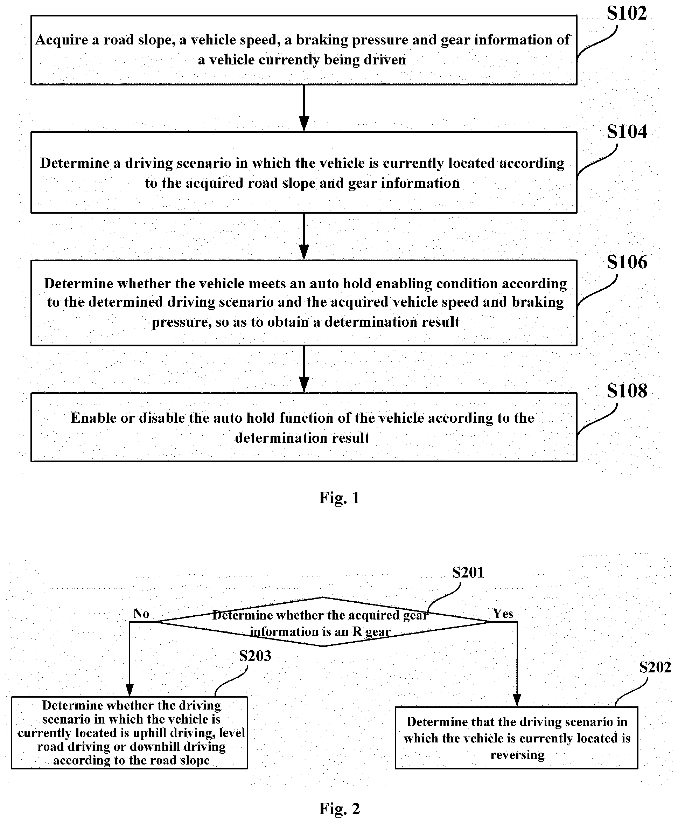

In order to solve the above technical problem, an embodiment of the present invention provides an auto hold control method. Fig. 1 shows a schematic flow diagram of an auto hold control method according to an embodiment of the present invention. Referring to Fig. 1, the auto hold control method may at least include the following steps S102 to S 108.

Step S102: acquiring a road slope, a vehicle speed, a braking pressure and gear information of a vehicle currently being driven.

Step S104: determining a driving scenario in which the vehicle is currently located according to the acquired road slope and gear information.

Step S106: determining whether the vehicle meets an auto hold enabling condition according to the determined driving scenario and the acquired vehicle speed and braking pressure, so as to obtain a determination result.

Step S108: enabling or disabling the auto hold function of the vehicle according to the determination result.

In the auto hold control method according to the embodiment of the present invention, current driving condition information of the vehicle (i.e., the road slope, the vehicle speed, the braking pressure, the gear information, or the like, of the vehicle currently being driven) is obtained, the driving scenario in which the vehicle is currently located is determined according to the road slope and the gear information, and then, whether the vehicle meets the auto hold enabling condition is determined according to the determined driving scenario and the acquired vehicle speed and braking pressure, such that the auto hold function of the vehicle is enabled or disabled accordingly. In the solution of the present invention, different auto hold strategies can be used according to different driving scenarios, and therefore, the requirements of users in different driving scenarios (use scenarios) are met, thereby improving the user experience and safety performance.

In the above step S 102, the current driving condition information of the vehicle is acquired and specifically is the road slope, the vehicle speed, the braking pressure, and the gear information of the vehicle currently being driven. Acquiring ways for the driving condition information are described below.

### (1) Acquisition of road slope

In particular, the road slope can be obtained in the following at least two ways.

First way: a current driving torque and a current longitudinal acceleration of the vehicle are acquired, and the road slope of the vehicle currently being driven is calculated according to the driving torque and the longitudinal acceleration.

The driving torque is an output torque of an engine or a motor which drives the vehicle to travel, and can be detected by a torque detection element, such as a torque sensor, or the like. The torque detection element may be provided in a driving control module of the vehicle. The longitudinal acceleration refers to an acceleration in the axial direction of the vehicle, and may be sensed by an acceleration sensor. An algorithm for calculating the road slope according to the driving torque and the longitudinal acceleration may be an existing algorithm, which may be known to those skilled in the art and is not repeated herein. The road slope is calculated by acquiring the current driving torque and longitudinal acceleration of the vehicle, which can be realized by fully utilizing existing components configured in the vehicle, thus avoiding an increase of the cost.

Second way: the road slope of the vehicle currently being driven is sensed by a slope sensor (gradiometer). This way can directly measure the road slope, and thus simplifies a calculation process and improves the processing efficiency.

### (2) Acquisition of vehicle speed

In particular, the current longitudinal acceleration of the vehicle and wheel speed information of each wheel may be acquired, and the vehicle speed of the vehicle currently being driven may be calculated according to the longitudinal acceleration and the wheel speed information of each wheel.

Acquisition of the longitudinal acceleration is described previously. The wheel speed information of each wheel refers to the rotational speed of each wheel, and may be obtained by a wheel speed sensor provided at each wheel or a transmission corresponding to the wheel, or the like. An algorithm for calculating the vehicle speed according to the longitudinal acceleration and the wheel speed information of each wheel may be an existing algorithm, which may be known to those skilled in the art and is not repeated herein.

### (3) Acquisition of braking pressure

The braking pressure herein refers to a pressure generated when the driver depresses a brake pedal of the vehicle. In particular, the braking pressure of the vehicle currently being driven may be sensed by a hydraulic sensor provided at the brake pedal of the vehicle.

### (4) Acquisition of gear information

The gear information can be obtained by monitoring a traveling gear of the vehicle with a gear shifting control module of the vehicle. The traveling gears of the vehicle may generally include a P gear (parking gear), an N gear (neutral gear), an R gear (reversing gear), a D gear (driving gear), or the like.

In the above step S104, the driving scenario in which the vehicle is currently located is determined according to the acquired road slope and gear information.

In one embodiment of the present invention, the driving scenarios may include reversing, uphill driving, level road driving, downhill driving, or the like. In this case, step S104 may include the following steps:
step S201: determining whether the acquired gear information is an R gear. If the acquired gear information is an R gear, step S202 is executed. If the acquired gear information is not an R gear, step S203 is executed.
Step S202: determining that the driving scenario in which the vehicle is currently located is reversing.
Step S203: determining whether the driving scenario in which the vehicle is currently located is uphill driving, level road driving or downhill driving according to the road slope.

In practical applications, the road slope refers to the longitudinal slope of a road surface, i.e., the degree of steepness of the road surface along the road advancing direction, and can be usually denoted using a percentage method, a degree method, or the like. When denoted using the degree method, the road slope α is denoted as: tanα=difference of elevation/horizontal distance; that is, the tangent value of the road slope α is equal to the ratio of the difference of elevation between two points (i.e., the vertical height between the two points) to the horizontal distance between the two points in the same slope section along the road advancing direction. A way of determining whether the vehicle travels uphill, on a level road or downhill according to the road slope is known to those skilled in the art. In a specific implementation, the road slope is the slope of a road in the vehicle advancing direction. A positive road slope indicates an upslope, and at this point, the driving scenario in which the vehicle is currently located can be determined as uphill driving. A negative road slope indicates a downslope, and at this point, the driving scenario in which the vehicle is currently located can be determined as downhill driving. A road slope of about 0 degrees indicates a level road, and at this point, the driving scenario in which the vehicle is currently located can be determined as level road driving.

In the above step S106, whether the vehicle meets the auto hold enabling condition is determined according to different driving scenarios and the vehicle speed and braking pressure of the vehicle.

In one embodiment of the present invention, after it is determined that the driving scenario in which the vehicle is currently located is reversing, uphill driving, level road driving or downhill driving according to the acquired road slope and gear information, execution of step S 106 may include the following four situations.

First situation: when the determined driving scenario is reversing, it may be directly determined that the vehicle does not meet the auto hold enabling condition as the determination result. That is, when the vehicle is in the driving scenario of reversing, it is directly determined that the vehicle does not meet the auto hold enabling condition, regardless of the current vehicle speed and braking pressure of the vehicle.

Second situation: when the determined driving scenario is uphill driving, whether the vehicle speed is less than a preset vehicle speed threshold is determined, and if yes, it is determined that the vehicle meets the auto hold enabling condition as the determination result. On an uphill road section, when the vehicle is stationary, a vehicle sliding situation is likely to occur before the driver actively brakes the vehicle, and therefore, whether the auto hold enabling condition is met is determined only according to the vehicle speed when the vehicle is in the driving scenario of uphill driving. Due to influences of factors, such as detection precision, or the like, the vehicle speed obtained when the vehicle is stationary may not be equal to 0 and has a certain deviation. Consequently, the preset vehicle speed threshold is set in the present application, and when the vehicle speed is less than the preset vehicle speed threshold, the vehicle can be considered to be stationary. The preset vehicle speed thresholds of different vehicles can be different, and can be calibrated on the actual vehicles using a special calibration tool.

Third situation: when the determined driving scenario is level road driving, whether the vehicle speed is less than the preset vehicle speed threshold and whether the braking pressure is greater than a first preset threshold are determined, and if yes, it is determined that the vehicle meets the auto hold enabling condition as the determination result. Since the vehicle does not have a sliding risk on a level road, when the vehicle is in the driving scenario of level road driving, whether the auto hold enabling condition is met is determined according to a combination of the vehicle speed and the braking pressure. Only when the vehicle is stationary and the braking pressure generated by the driver depressing the brake pedal exceeds the first preset threshold, the current driving intention of the driver is considered as the desire to enable the auto hold function, and therefore, the vehicle is determined to meet the auto hold enabling condition. The first preset thresholds of different vehicles can be different, and can be calibrated on the actual vehicles using a special calibration tool.

Fourth situation: when the determined driving scenario is downhill driving, whether the vehicle speed is less than the preset vehicle speed threshold and whether the braking pressure is greater than a second preset threshold are determined, and if yes, it is determined that the vehicle meets the auto hold enabling condition as the determination result. On a downhill road section, under normal driving conditions, the driver is required to stop the vehicle by active braking, so when the vehicle is in the driving scenario of downhill driving, whether the auto hold enabling condition is met may be determined according to a combination of the vehicle speed and the braking pressure. Only when the vehicle is stationary and the braking pressure generated by the driver depressing the brake pedal exceeds the second preset threshold, the current driving intention of the driver is considered as the desire to enable the auto hold function, and therefore, the vehicle is determined to meet the auto hold enabling condition. The second preset thresholds of different vehicles can be different, and can be calibrated on the actual vehicles using a special calibration tool. In addition, the braking pressure required for the vehicle to stop on the downhill road section is usually greater than the braking pressure required for the vehicle to stop on the level road, and therefore, in general, the second preset threshold is greater than the first preset threshold.

In the embodiment of the present invention, the meeting determination of the auto hold enabling condition is adjusted according to different driving scenarios. Specifically, for the reversing scenario, the auto hold enabling condition is not met whatever any vehicle speed and braking pressure; for the uphill driving scenario, the auto hold enabling condition can be met when the vehicle speed is less than the preset vehicle speed threshold; for the level road driving scenario, the auto hold enabling condition is met when the vehicle speed is less than the preset vehicle speed threshold and the braking pressure is greater than the first preset threshold; for the downhill driving scenario, the auto hold enabling condition is met when the vehicle speed is less than the preset vehicle speed threshold and the braking pressure is greater than the second preset threshold. Therefore, the problems that in the prior art, the auto hold function is triggered according to a single determination condition, the user experience is poor, and the safety risk exists are solved.

In the above step S108, the auto hold function of the vehicle is enabled or disabled according to the determination result. Specifically, if the determination result is that the vehicle does not meet the auto hold enabling condition, the auto hold function of the vehicle is disabled. If the determination result is that the vehicle meets the auto hold enabling condition, the auto hold function of the vehicle is enabled.

The auto hold function is disabled or enabled according to the determination result of the meeting of the auto hold enabling condition in different driving scenarios, thus meeting the requirements of users in different driving scenarios (use scenarios), improving the user experience, and improving the safety performance. Specifically, when the vehicle stops on the uphill road section and the driver does not apply an enough braking force to keep the vehicle stationary, the auto hold function is triggered in time to perform active braking, thus avoiding the vehicle sliding danger. In the process of following on the level road or downslope, it is avoided that due to a low enabling threshold, the auto hold function is frequently triggered, and thus, driving comfort is reduced. Operation inconvenience and a collision risk caused by frequent enabling of the auto hold function are prevented during parking.

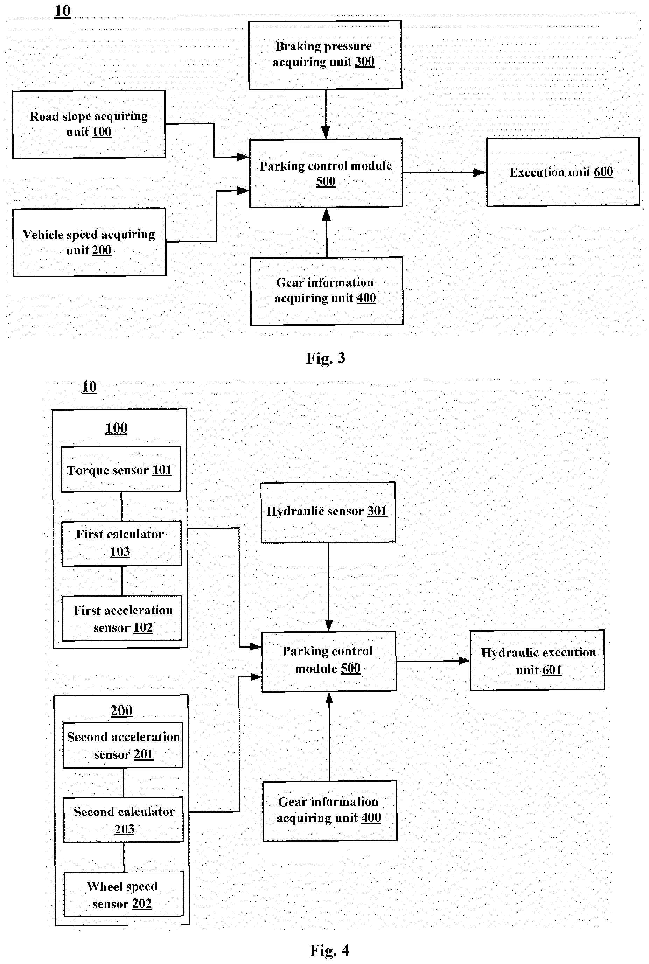

Based on the same technical concept, an embodiment of the present invention further provides an auto hold control system 10. Fig. 3 shows a schematic structural diagram of an auto hold control system 10 according to an embodiment of the present invention. Referring to Fig. 3, the control system 10 may at least include a road slope acquiring unit 100, a vehicle speed acquiring unit 200, a braking pressure acquiring unit 300, a gear information acquiring unit 400, a parking control module 500 and an execution unit 600.

The road slope acquiring unit 100 may acquire a road slope of a vehicle currently being driven. The vehicle speed acquiring unit 200 may acquire a vehicle speed of the vehicle currently being driven. The braking pressure acquiring unit 300 may acquire a braking pressure of the vehicle currently being driven. The gear information acquiring unit 400 may acquire gear information of the vehicle currently being driven. The gear information acquiring unit 400 may be a gear shifting control module of the vehicle. The parking control module 500 is connected with the road slope acquiring unit 100, the vehicle speed acquiring unit 200, the braking pressure acquiring unit 300 and the gear information acquiring unit 400, and may determine a driving scenario in which the vehicle is currently located according to the acquired road slope and gear information, determine whether the vehicle meets an auto hold enabling condition according to the determined driving scenario and the acquired vehicle speed and braking pressure, so as to obtain a determination result, and generate a corresponding control signal according to the determination result. The execution unit 600 is connected with the parking control module 500, receives the corresponding control signal sent by the parking control module 500, and enables or disables the auto hold function of the vehicle according to the control signal.

In one embodiment of the present invention, the driving scenarios may include reversing, uphill driving, level road driving, downhill driving, or the like. In this case, the parking control module 500 may determine the driving scenario in which the vehicle is currently located by: determining whether the acquired gear information is an R gear. If the acquired gear information is the R gear, it is determined that the driving scenario in which the vehicle is currently located is reversing. If the acquired gear information is not the R gear, whether the driving scenario in which the vehicle is currently located is uphill driving, level road driving or downhill driving is determined according to the road slope. A way of determining whether the driving scenario in which the vehicle is currently located is uphill driving, level road driving or downhill driving according to the road slope is described previously and not repeated.

In one embodiment of the present invention, the corresponding control signal may include one of a first control signal indicating enabling of the auto hold function and a second control signal indicating disabling of the auto hold function. Correspondingly, the parking control module 500 may determine whether the auto hold enabling condition is met for different driving scenarios and generate corresponding control signals according to the determination by:
when the determined driving scenario is reversing, directly determining that the vehicle does not meet the auto hold enabling condition, and generating the second control signal; when the determined driving scenario is uphill driving, determining whether the vehicle speed is less than a preset vehicle speed threshold, and if yes, determining that the vehicle meets the auto hold enabling condition, and generating the first control signal; when the determined driving scenario is level road driving, determining whether the vehicle speed is less than the preset vehicle speed threshold and whether the braking pressure is greater than a first preset threshold, and if yes, determining that the vehicle meets the auto hold enabling condition, and generating the first control signal; and when the determined driving scenario is downhill driving, determining whether the vehicle speed is less than the preset vehicle speed threshold and whether the braking pressure is greater than a second preset threshold, and if yes, determining that the vehicle meets the auto hold enabling condition, and generating the first control signal, the second preset threshold being greater than the first preset threshold. The definition and setting of the preset vehicle speed threshold, the first preset threshold and the second preset threshold are described previously and not repeated.

Correspondingly, the execution unit 600 disables the auto hold function of the vehicle according to the second control signal or enables the auto hold function of the vehicle according to the first control signal.

Referring to Fig. 4, in one embodiment of the present invention, the road slope acquiring unit 100 may include a torque sensor 101, a first acceleration sensor 102, and a first calculator 103. The torque sensor 101 acquires a current driving torque of the vehicle, and may be provided in the driving control module of the vehicle. The driving torque is an output torque of an engine or a motor which drives the vehicle to travel. The first acceleration sensor 102 is configured to acquire a current longitudinal acceleration of the vehicle. The first calculator 103 may be connected with the torque sensor 101 and the first acceleration sensor 102, and calculates the road slope of the vehicle currently being driven according to the driving torque acquired by the torque sensor 101 and the longitudinal acceleration acquired by the first acceleration sensor 102. The algorithm for calculating the road slope according to the driving torque and the longitudinal acceleration may be an existing algorithm, which may be known to those skilled in the art and is not repeated herein.

In one embodiment of the present invention, the vehicle speed acquiring unit 200 may include a second acceleration sensor 201, a wheel speed sensor 202, and a second calculator 203. The second acceleration sensor 201 is configured to acquire the current longitudinal acceleration of the vehicle. The number of the wheel speed sensors 202 may be the same as the number of wheels of the vehicle, and each wheel speed sensor 202 correspondingly acquires the current wheel speed information of each wheel of the vehicle; for example, for a four-wheel sedan, four wheel speed sensors 202 may be provided for sensing the current wheel speeds of four wheels respectively. The second calculator 203 can be connected with the second acceleration sensor 201 and the wheel speed sensors 202, and calculates the vehicle speed of the vehicle currently being driven according to the longitudinal acceleration obtained by the second acceleration sensor 201 and the wheel speed information of each wheel obtained by each wheel speed sensor 202. The algorithm for calculating the vehicle speed according to the longitudinal acceleration and the wheel speed information of each wheel may be an existing algorithm, which may be known to those skilled in the art and is not repeated herein.

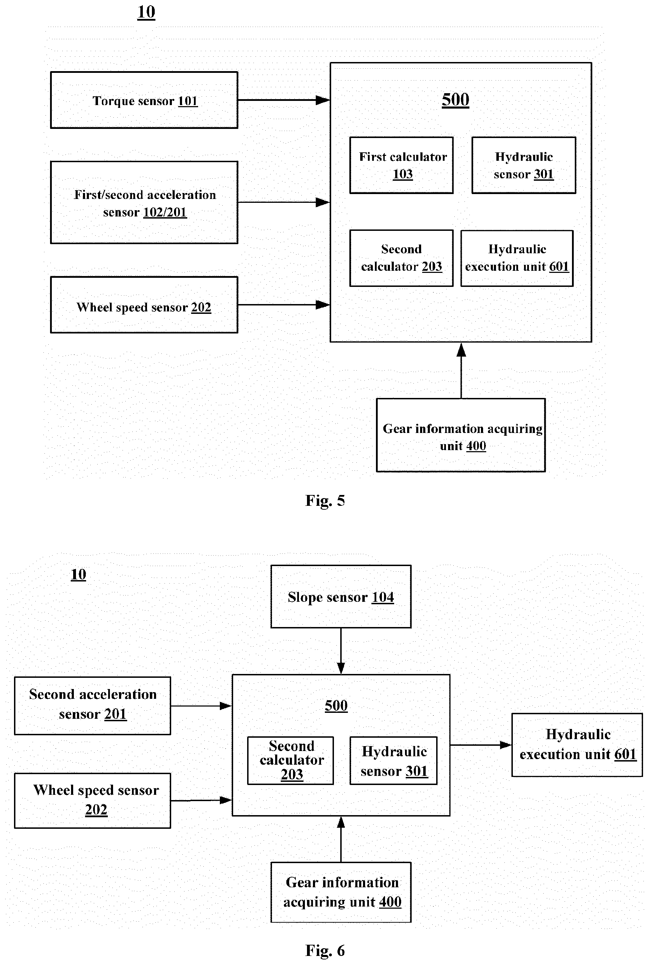

Referring to Fig. 5, in one embodiment of the present invention, the first acceleration sensor 102 and the second acceleration sensor 201 may be the same acceleration sensor, so as to reduce the number of components and reduce the apparatus cost.

In one embodiment of the present invention, the first calculator 103 and the second calculator 203 may be integrated in the parking control module 500, so as to intensively and effectively utilize computing resources of the control system 10, improve the computing processing capability, and further improve the efficiency of the auto hold control. Furthermore, the first calculator 103 and the second calculator 203 may also be formed by the same processor, which runs corresponding computer program codes to perform the calculation of the road slope and the vehicle speed of the vehicle.

With continued reference to Fig. 4, in one embodiment of the present invention, the braking pressure acquiring unit 300 may be a hydraulic sensor 301. The hydraulic sensor 301 may be provided at the brake pedal of the vehicle and sense the braking pressure of the vehicle currently being driven. According to the solution of the present embodiment, the braking pressure of the vehicle currently being driven can be sensed by the original hydraulic sensor of the vehicle, thus avoiding an additional increase of the apparatus cost. Further, as shown in Fig. 5, the hydraulic sensor 301 may be integrated in the parking control module 500 to reduce the signal transmission path length and improve the signal transmission efficiency.

With continued reference to Fig. 4, in one embodiment of the present invention, the execution unit 600 may be a hydraulic execution unit 601. After receiving the first control signal sent by the parking control module 500, the hydraulic execution unit 601 applies a certain hydraulic pressure to a braking system of the vehicle to enable the auto hold function. Further, the execution unit 600 (specifically, the hydraulic execution unit 601, see Fig. 5) may be integrated in the parking control module 500 to reduce the signal transmission path length and improve the signal transmission efficiency.

Referring to Fig. 6, in one embodiment of the present invention, the road slope acquiring unit 100 may be a slope sensor 104 (or gradiometer) configured to sense the road slope of the vehicle currently being driven. The road slope is directly measured by the slope sensor 104, thus simplifying a calculation process, and improving the processing efficiency.

In some embodiments of the present invention, the wheel speed sensor 202 may be connected with the parking control module 500 through a hard wire to transmit data. The other units and sensors may communicate with the parking control module 500 through a FlexRay longitudinal or controller area network (CAN) bus.

According to any one or a combination of plural optional embodiments, the embodiments of the present invention can achieve the following beneficial effects.

In the auto hold control method and system according to the embodiment of the present invention, current driving condition information of the vehicle (i.e., the road slope, the vehicle speed, the braking pressure, the gear information, or the like, of the vehicle currently being driven) is obtained, the driving scenario in which the vehicle is currently located is determined according to the road slope and the gear information, and then, whether the vehicle meets the auto hold enabling condition is determined according to the determined driving scenario and the acquired vehicle speed and braking pressure, such that the auto hold function of the vehicle is enabled or disabled accordingly. In the solution of the present invention, different auto hold strategies can be used according to different driving scenarios, and therefore, the requirements of users in different driving scenarios (use scenarios) are met, thereby improving the user experience and safety performance.

Further, after the driving scenario of the vehicle is determined, for different driving scenarios, whether the auto hold enabling condition is met is conveniently and accurately determined according to the vehicle speed and the braking pressure of the vehicle, thereby improving the efficiency and accuracy of auto hold control, and further improving the user experience and safety performance.

## Claims

1. An auto hold control method, comprising:
acquiring (S102) a road slope, a vehicle speed, a braking pressure and gear information of a vehicle currently being driven;
determining (S104) a driving scenario in which the vehicle is currently located according to the acquired road slope and gear information;
determining (S106) whether the vehicle meets an auto hold enabling condition according to the determined driving scenario and the acquired vehicle speed and braking pressure, so as to obtain a determination result; and
enabling (S108) or disabling the auto hold function of the vehicle according to the determination result, wherein the driving scenarios comprise reversing, uphill driving, level road driving, and downhill driving;
the determining a driving scenario in which the vehicle is currently located according to the acquired road slope and gear information comprises:
determining (S201) whether the gear information is an R gear;
if the gear information is the R gear, determining (S202) that the driving scenario in which the vehicle is currently located is reversing; and
if the gear information is not the R gear, determining (S203) whether the driving scenario in which the vehicle is currently located is uphill driving, level road driving or downhill driving according to the road slope, **characterized in that**
the determining whether the vehicle meets an auto hold enabling condition according to the determined driving scenario and the acquired vehicle speed and braking pressure, so as to obtain a determination result comprises:
when the determined driving scenario is reversing, directly determining that the vehicle does not meet the auto hold enabling condition as the determination result;
when the determined driving scenario is uphill driving, determining whether the vehicle speed is less than a preset vehicle speed threshold, and if yes, determining that the vehicle meets the auto hold enabling condition as the determination result;
when the determined driving scenario is level road driving, determining whether the vehicle speed is less than the preset vehicle speed threshold and whether the braking pressure is greater than a first preset threshold, and if yes, determining that the vehicle meets the auto hold enabling condition as the determination result; and
when the determined driving scenario is downhill driving, determining whether the vehicle speed is less than the preset vehicle speed threshold and whether the braking pressure is greater than a second preset threshold, and if yes, determining that the vehicle meets the auto hold enabling condition as the determination result, the second preset threshold being greater than the first preset threshold, wherein
the enabling or disabling the auto hold function of the vehicle according to the determination result comprises:
if the determination result is that the vehicle does not meet the auto hold enabling condition, disabling the auto hold function of the vehicle; and
if the determination result is that the vehicle meets the auto hold enabling condition, enabling the auto hold function of the vehicle.

2. The control method according to claim 1, wherein acquiring the road slope of the vehicle currently being driven comprises:
acquiring a current driving torque and a current longitudinal acceleration of the vehicle, and calculating the road slope of the vehicle currently being driven according to the driving torque and the longitudinal acceleration;
or,
sensing the road slope of the vehicle currently being driven by a slope sensor.

3. The control method according to claim 1 or 2, wherein acquiring the vehicle speed of the vehicle currently being driven comprises:
acquiring a current longitudinal acceleration of the vehicle and wheel speed information of each wheel, and calculating the vehicle speed of the vehicle currently being driven according to the longitudinal acceleration and the wheel speed information of each wheel.

4. The control method according to any one of claims 1 to 3, wherein acquiring the braking pressure of the vehicle currently being driven comprises:
sensing the braking pressure of the vehicle currently being driven by a hydraulic sensor provided at a brake pedal of the vehicle.

5. An auto hold control system (10), comprising:
a road slope acquiring unit (100) configured to acquire a road slope of a vehicle currently being driven;
a vehicle speed acquiring unit (200) configured to acquire a vehicle speed of the vehicle currently being driven;
a braking pressure acquiring unit (300) configured to acquire a braking pressure of the vehicle currently being driven;
a gear information acquiring unit (400) configured to acquire gear information of the vehicle currently being driven;
a parking control module (500) connected with the road slope acquiring unit (100), the vehicle speed acquiring unit (200), the braking pressure acquiring unit (300) and the gear information acquiring unit (400), and configured to determine a driving scenario in which the vehicle is currently located according to the acquired road slope and gear information, determine whether the vehicle meets an auto hold enabling condition according to the determined driving scenario and the acquired vehicle speed and braking pressure, so as to obtain a determination result, and generate a corresponding control signal according to the determination result; and
an execution unit (600) connected with the parking control module (500) and configured to enable or disable the auto hold function of the vehicle according to the corresponding control signal, wherein the driving scenarios comprise reversing, uphill driving, level road parking, and downhill driving;
the parking control module (500) is further configured to:
determine whether the gear information is an R gear;
if the gear information is the R gear, determine that the driving scenario in which the vehicle is currently located is reversing; and
if the gear information is not the R gear, determine whether the driving scenario in which the vehicle is currently located is uphill driving, level road driving or downhill driving according to the road slope, **characterized in that** the corresponding control signal comprises one of a first control signal indicating enabling of the auto hold function and a second control signal indicating disabling of the auto hold function; the parking control module (500) is further configured to:
when the determined driving scenario is reversing, directly determine that the vehicle does not meet the auto hold enabling condition, and generate the second control signal;
when the determined driving scenario is uphill driving, determine whether the vehicle speed is less than a preset vehicle speed threshold, and if yes, determine that the vehicle meets the auto hold enabling condition, and generate the first control signal;
when the determined driving scenario is level road driving, determine whether the vehicle speed is less than the preset vehicle speed threshold and whether the braking pressure is greater than a first preset threshold, and if yes, determine that the vehicle meets the auto hold enabling condition, and generate the first control signal; and
when the determined driving scenario is downhill driving, determine whether the vehicle speed is less than the preset vehicle speed threshold and whether the braking pressure is greater than a second preset threshold, and if yes, determine that the vehicle meets the auto hold enabling condition, and generate the first control signal, the second preset threshold being greater than the first preset threshold;
the execution unit (600) is further configured to:
disable the auto hold function of the vehicle according to the second control signal; or
enable the auto hold function of the vehicle according to the first control signal.

6. The control system (10) according to claim 5, wherein the road slope acquiring unit (100) comprises:
a torque sensor (101) configured to acquire a current driving torque of the vehicle;
a first acceleration sensor (102) configured to acquire a current longitudinal acceleration of the vehicle; and
a first calculator (103) configured to calculate the road slope of the vehicle currently being driven according to the acquired driving torque and longitudinal acceleration.

7. The control system (10) according to claim 5 or 6, wherein the road slope acquiring unit (100) is a slope sensor (104) configured to sense the road slope of the vehicle currently being driven.

8. The control system (10) according to any one of claims 5 to 7, wherein the vehicle speed acquiring unit (200) comprises:
a second acceleration sensor (201) configured to acquire a current longitudinal acceleration of the vehicle;
a wheel speed sensor (202) configured to acquire current wheel speed information of each wheel of the vehicle; and
a second calculator (203) configured to calculate the vehicle speed of the vehicle currently being driven according to the acquired longitudinal acceleration and wheel speed information of each wheel.

9. The control system (10) according to any one of claims 5 to 8, wherein the braking pressure acquiring unit (300) is a hydraulic sensor (301);
the hydraulic sensor (301) is provided on a brake pedal of the vehicle and configured to sense the braking pressure of the vehicle currently being driven.

10. The control system (10) according to any one of claims 5 to 9, wherein the execution unit (600) is a hydraulic execution unit (601) integrated in the parking control module (500).

## Patentansprüche

1. Auto-Hold-Steuerverfahren, umfassend:
Erfassen (S102) einer Fahrbahnneigung, einer Fahrzeuggeschwindigkeit, eines Bremsdrucks und von Ganginformationen eines aktuell fahrenden Fahrzeugs;
Bestimmen (S104) eines Fahrszenarios, in dem sich das Fahrzeug aktuell befindet, gemäß der erfassten Fahrbahnneigungs- und Ganginformationen;
Bestimmen (S106), ob das Fahrzeug gemäß dem ermittelten Fahrszenario und der erfassten Fahrzeuggeschwindigkeit und dem erfassten Bremsdruck eine Auto-Hold-Aktivierungsbedingung erfüllt, um ein Bestimmungsergebnis zu erhalten; und
Aktivieren (S108) oder Deaktivieren der Auto-Hold-Funktion des Fahrzeugs gemäß dem Bestimmungsergebnis, wobei die Fahrszenarien Rückwärtsfahren, Bergauffahren, Fahren auf ebener Straße und Bergabfahren umfassen;
wobei das Bestimmen eines Fahrszenarios, in dem sich das Fahrzeug aktuell befindet, gemäß der erfassten Fahrbahnneigungs- und Ganginformationen umfasst:
Bestimmen (S201), ob es sich bei der Ganginformation um einen R-Gang handelt;
wenn es sich bei der Ganginformation um den R-Gang handelt, Bestimmen (S202), dass das Fahrszenario, in dem sich das Fahrzeug aktuell befindet, Rückwärtsfahren ist; und
wenn es sich bei der Ganginformation nicht um den R-Gang handelt, Bestimmen (S203), ob das Fahrszenario, in dem sich das Fahrzeug aktuell befindet, abhängig von der Fahrbahnneigung Bergauffahren, Fahren auf ebener Straße oder Bergabfahren ist,
**dadurch gekennzeichnet, dass**
das Bestimmen, ob das Fahrzeug gemäß dem ermittelten Fahrszenario und der erfassten Fahrzeuggeschwindigkeit und dem erfassten Bremsdruck eine Auto-Hold-Aktivierungsbedingung erfüllt, um ein Bestimmungsergebnis zu erhalten, umfasst:
wenn das ermittelte Fahrszenario Rückwärtsfahren ist, direktes Bestimmen, dass das Fahrzeug die Auto-Hold-Aktivierungsbedingung nicht erfüllt, als Bestimmungsergebnis;
wenn das ermittelte Fahrszenario ein Bergauffahren ist, Bestimmen, ob die Fahrzeuggeschwindigkeit unter einem voreingestellten Fahrzeuggeschwindigkeitsschwellenwert liegt, und wenn ja, Bestimmen, dass das Fahrzeug die Auto-Hold-Aktivierungsbedingung als Bestimmungsergebnis erfüllt;
wenn das bestimmte Fahrszenario ein Fahren auf ebener Straße ist, Bestimmen, ob die Fahrzeuggeschwindigkeit unter dem voreingestellten Fahrzeuggeschwindigkeitsschwellenwert liegt und ob der Bremsdruck größer als ein erster voreingestellter Schwellenwert ist, und wenn ja, Bestimmen, dass das Fahrzeug die Auto-Hold-Aktivierungsbedingung als Bestimmungsergebnis erfüllt; und
wenn das ermittelte Fahrszenario ein Bergabfahren ist, Bestimmen, ob die Fahrzeuggeschwindigkeit unter dem voreingestellten Fahrzeuggeschwindigkeitsschwellenwert liegt und ob der Bremsdruck größer als ein zweiter voreingestellter Schwellenwert ist, und wenn ja, Bestimmen, dass das Fahrzeug die Auto-Hold-Aktivierungsbedingung als Bestimmungsergebnis erfüllt, wobei der zweite voreingestellte Schwellenwert größer als der erste voreingestellte Schwellenwert ist,
wobei das Aktivieren oder Deaktivieren der Auto-Hold-Funktion des Fahrzeugs gemäß dem Bestimmungsergebnis umfasst:
wenn das Bestimmungsergebnis ist, dass das Fahrzeug die Auto-Hold-Aktivierungsbedingung nicht erfüllt, Deaktivieren der Auto-Hold-Funktion des Fahrzeugs; und
wenn das Bestimmungsergebnis ist, dass das Fahrzeug die Auto-Hold-Aktivierungsbedingung erfüllt, Aktivieren der Auto-Hold-Funktion des Fahrzeugs.

2. Steuerverfahren nach Anspruch 1, wobei das Erfassen der Fahrbahnneigung des aktuell fahrenden Fahrzeugs umfasst:
Erfassen eines aktuellen Antriebsmoments und einer aktuellen Längsbeschleunigung des Fahrzeugs und Berechnen der Fahrbahnneigung des aktuell fahrenden Fahrzeugs gemäß dem Antriebsmoment und der Längsbeschleunigung;
oder
Erfassen der Fahrbahnneigung des aktuell fahrenden Fahrzeugs durch einen Neigungssensor.

3. Steuerverfahren nach Anspruch 1 oder 2, wobei das Erfassen der Fahrzeuggeschwindigkeit des aktuell fahrenden Fahrzeugs Folgendes umfasst:
Erfassen einer aktuellen Längsbeschleunigung des Fahrzeugs und Radgeschwindigkeitsinformationen jedes Rads und Berechnen der Fahrzeuggeschwindigkeit des aktuell fahrenden Fahrzeugs gemäß der Längsbeschleunigung und der Radgeschwindigkeitsinformationen jedes Rads.

4. Steuerverfahren nach einem der Ansprüche 1 bis 3, wobei das Erfassen des Bremsdrucks des aktuell fahrenden Fahrzeugs umfasst:
Erfassen des Bremsdrucks des aktuell fahrenden Fahrzeugs durch einen hydraulischen Sensor, der an einem Bremspedal des Fahrzeugs vorgesehen ist.

5. Auto-Hold-Steuersystem (10), umfassend:
eine Fahrbahnneigung-Erfassungseinheit (100), die so konfiguriert ist, dass sie eine Fahrbahnneigung eines aktuell fahrenden Fahrzeugs erfasst;
eine Fahrzeuggeschwindigkeits-Erfassungseinheit (200), die dazu konfiguriert ist, eine Fahrzeuggeschwindigkeit des aktuell fahrenden Fahrzeugs zu erfassen;
eine Bremsdruck-Erfassungseinheit (300), die so konfiguriert ist, dass sie einen Bremsdruck des aktuell fahrenden Fahrzeugs erfasst;
eine Ganginformations-Erfassungseinheit (400), die so konfiguriert ist, dass sie eine Ganginformation des aktuell fahrenden Fahrzeugs erfasst;
ein Parksteuermodul (500), das mit der Fahrbahnneigung-Erfassungseinheit (100), der Fahrzeuggeschwindigkeits-Erfassungseinheit (200), der Bremsdruck-Erfassungseinheit (300) und der Ganginformations-Erfassungseinheit (400) verbunden und so konfiguriert ist, Dass es ein Fahrszenario bestimmt, in dem sich das Fahrzeug aktuell befindet, gemäß der erfassten Fahrbahnneigungs- und Ganginformationen, und bestimmt, ob das Fahrzeug eine Auto-Hold-Aktivierungsbedingung erfüllt, gemäß dem ermittelten Fahrszenario und der erfassten Fahrzeuggeschwindigkeit und dem erfassten Bremsdruck, um ein Bestimmungsergebnis zu erhalten und ein entsprechendes Steuersignal entsprechend dem Bestimmungsergebnis zu erzeugen; und
eine Ausführungseinheit (600), die mit dem Parksteuermodul (500) verbunden und so konfiguriert ist, dass sie die Auto-Hold-Funktion des Fahrzeugs gemäß dem entsprechenden Steuersignal zu aktivieren oder zu deaktivieren, wobei die Fahrszenarien Rückwärtsfahren, Bergauffahren, Fahren auf ebener Straße und Bergabfahren umfassen;
wobei das Parksteuermodul (500) weiterhin zu konfiguriert ist:
Bestimmen, ob es sich bei den Ganginformationen um einen R-Gang handelt;
wenn es sich bei der Ganginformation um den R-Gang handelt, Bestimmen, dass das Fahrszenario, in dem sich das Fahrzeug aktuell befindet, Rückwärtsfahren ist; und
wenn es sich bei der Ganginformation nicht um den R-Gang handelt, Bestimmen, ob das Fahrszenario dem sich das Fahrzeug aktuell befindet, abhängig von der Fahrbahnneigung Bergauffahren, Fahren auf ebener Straße oder Bergabfahren ist, **dadurch gekennzeichnet, dass** das entsprechende Steuersignal entweder ein erstes Steuersignal, das die Aktivierung der Auto-Hold-Funktion anzeigt, oder ein zweites Steuersignal, das die Deaktivierung der Auto-Hold-Funktion anzeigt, umfasst, wobei das Parksteuermodul (500) weiterhin dazu konfiguriert ist:
wenn das ermittelte Fahrszenario Rückwärtsfahren ist, direktes Bestimmen, dass das Fahrzeug die Auto-Hold-Aktivierungsbedingung nicht erfüllt, als Bestimmungsergebnis; und Erzeugen des zweiten Steuersignals;
wenn das ermittelte Fahrszenario ein Bergauffahren ist, Bestimmen, ob die Fahrzeuggeschwindigkeit unter einem voreingestellten Fahrzeuggeschwindigkeitsschwellenwert liegt, und wenn ja, Bestimmen, dass das Fahrzeug die Auto-Hold-Aktivierungsbedingung als Bestimmungsergebnis erfüllt; und Erzeugen des ersten Steuersignals;
wenn das bestimmte Fahrszenario ein Fahren auf ebener Straße ist, Bestimmen, ob die Fahrzeuggeschwindigkeit unter dem voreingestellten Fahrzeuggeschwindigkeitsschwellenwert liegt und ob der Bremsdruck größer als ein erster voreingestellter Schwellenwert ist, und wenn ja, Bestimmen, dass das Fahrzeug die Auto-Hold-Aktivierungsbedingung als Bestimmungsergebnis erfüllt; und Erzeugen des ersten Steuersignals;
wenn das ermittelte Fahrszenario ein Bergabfahren ist, Bestimmen, ob die Fahrzeuggeschwindigkeit unter dem voreingestellten Fahrzeuggeschwindigkeitsschwellenwert liegt und ob der Bremsdruck größer als ein zweiter voreingestellter Schwellenwert ist, und wenn ja, Bestimmen, dass das Fahrzeug die Auto-Hold-Aktivierungsbedingung als Bestimmungsergebnis erfüllt, und Erzeugen des ersten Steuersignals;wobei der zweite voreingestellte Schwellenwert größer als der erste voreingestellte Schwellenwert ist,
wobei die Ausführungseinheit (600) weiterhin dazu konfiguriert ist:
Deaktivieren der Auto-Hold-Funktion des Fahrzeugs gemäß dem zweiten Steuersignal;
Aktivieren der Auto-Hold-Funktion des Fahrzeugs gemäß dem ersten Steuersignal.

6. Steuersystem (10) nach Anspruch 5, wobei die Fahrbahnneigung-Erfassungseinheit (100) umfasst:
einen Drehmomentsensor (101), der so konfiguriert ist, dass er ein aktuelles Antriebsmoment des Fahrzeugs erfasst;
einen ersten Beschleunigungssensor (102), der so konfiguriert ist, dass er eine aktuelle Längsbeschleunigung des Fahrzeugs erfasst; und
einen ersten Rechner (103), der so konfiguriert ist, dass er die Fahrbahnneigung des aktuell fahrenden Fahrzeugs gemäß dem erfassten Antriebsmoment und der Längsbeschleunigung berechnet.

7. Steuersystem (10) nach Anspruch 5 oder 6, wobei die Fahrbahnneigung-Erfassungseinheit (100) ein Neigungssensor (104) ist, der so konfiguriert ist, dass er die Fahrbahnneigung des gerade gefahrenen Fahrzeugs erfasst.

8. Steuersystem (10) nach einem der Ansprüche 5 bis 7, wobei die Fahrzeuggeschwindigkeits-Erfassungseinheit (200) umfasst:
einen zweiten Beschleunigungssensor (201), der so konfiguriert ist, dass er eine aktuelle Längsbeschleunigung des Fahrzeugs erfasst; und
einen Radgeschwindigkeitssensor (202), der so konfiguriert ist, dass er aktuelle Radgeschwindigkeitsinformationen für jedes Rad des Fahrzeugs erfasst; und
einen zweiten Rechner (203), der so konfiguriert ist, dass er die Fahrzeuggeschwindigkeit des aktuell fahrenden Fahrzeugs gemäß den erfassten Längsbeschleunigungs- und Radgeschwindigkeitsinformationen jedes Rads berechnet.

9. Steuersystem (10) nach einem der Ansprüche 5 bis 8, wobei die Bremsdruck-Erfassungseinheit (300) ein Hydrauliksensor (301) ist;
wobei der Hydrauliksensor (301) an einem Bremspedal des Fahrzeugs vorgesehen und so konfiguriert ist, dass er den Bremsdruck des aktuell fahrenden Fahrzeugs erfasst.

10. Steuersystem (10) nach einem der Ansprüche 5 bis 9, wobei die Ausführungseinheit (600) eine hydraulische Ausführungseinheit (601) ist, die in das Parksteuermodul (500) integriert ist.

## Revendications

1. Procédé de commande d'auto-maintien, comprenant :
acquérir (S102) une pente de route, une vitesse de véhicule, une pression de freinage et une information d'engrenage d'un véhicule en cours de conduite ;
déterminer (S104) un scénario de conduite dans lequel se trouve actuellement le véhicule en fonction de la pente de route et de l'information d'engrenage acquises ;
déterminer (S106) si le véhicule satisfait à une condition d'activation de l'auto-maintien en fonction du scénario de conduite déterminé et de la vitesse de véhicule et de la pression de freinage acquises, afin d'obtenir un résultat de détermination ; et
activer (S108) ou désactiver la fonction d'auto-maintien du véhicule en fonction du résultat de détermination, dans lequel les scénarios de conduite comprennent une marche arrière, une conduite en montée, une conduite en palier et une conduite en descente ;
l'étape de déterminer un scénario de conduite dans lequel se trouve actuellement le véhicule en fonction de la pente de route et de l'information d'engrenage acquises comprend :
déterminer (S201) si l'information d'engrenage s'agit un engrenage R ;
si l'information d'engrenage s'agit l'engrenage R, déterminer (S202) que le scénario de conduite dans lequel se trouve actuellement le véhicule est la marche arrière ; et
si l'information d'engrenage ne s'agit pas l'engrenage R, déterminer (S203) si le scénario de conduite dans lequel se trouve actuellement le véhicule est la conduite en montée, la conduite en palier ou la conduite en descente en fonction de la pente de la route, **caractérisé en ce que**,
l'étape de déterminer si le véhicule satisfait à une condition d'activation de l'auto-maintien en fonction du scénario de conduite déterminé et de la vitesse de véhicule et de la pression de freinage acquises, afin d'obtenir un résultat de détermination comprend :
lorsque le scénario de conduite déterminé est la marche arrière, déterminer directement que le véhicule ne satisfait pas à la condition d'activation de l'auto-maintien comme résultat déterminé ;
lorsque le scénario de conduite déterminé est la conduite en montée, déterminer si la vitesse de véhicule est inférieure à un seuil de vitesse de véhicule prédéfini et si oui, déterminer que le véhicule satisfait à la condition d'activation de l'auto-maintien comme résultat déterminé ;
lorsque le scénario de conduite déterminé est la conduite en palier, déterminer si la vitesse de véhicule est inférieure au seuil de vitesse de véhicule prédéfini et si la pression de freinage est supérieure à un premier seuil prédéfini, et si oui, déterminer que le véhicule satisfait à la condition d'activation de l'auto-maintien comme résultat déterminé ; et
lorsque le scénario de conduite déterminé est la conduite en descente, déterminer si la vitesse de véhicule est inférieure au seuil de vitesse de véhicule prédéfini et si la pression de freinage est supérieure à un deuxième seuil prédéfini, et si oui, déterminer que le véhicule satisfait à la condition d'activation de l'auto-maintien comme résultat déterminé, le deuxième seuil prédéfini étant supérieur au premier seuil prédéfini, dans lequel,
l'étape d'activer ou désactiver la fonction d'auto-maintien du véhicule en fonction du résultat de détermination comprend :
si le résultat de détermination est que le véhicule ne satisfait pas à la condition d'activation de l'auto-maintien, désactiver la fonction d'auto-maintien du véhicule ; et
si le résultat de détermination est que le véhicule satisfait à la condition d'activation de l'auto-maintien, activer la fonction d'auto-maintien du véhicule.

2. Procédé de commande selon la revendication 1, dans lequel l'étape d'acquérir la pente de route du véhicule en cours de conduite comprend :
acquérir un couple de conduite actuel et une accélération longitudinale actuelle du véhicule, et
calculer la pente de route du véhicule en cours de conduite en fonction du couple de conduite et de l'accélération longitudinale ;
ou,
détecter la pente de route du véhicule en cours de conduite par un capteur de pente.

3. Procédé de commande selon la revendication 1 ou 2, dans lequel l'étape d'acquérir la vitesse de véhicule du véhicule en cours de conduite comprend :
acquérir une accélération longitudinale actuelle du véhicule et une information de vitesse de roue de chaque roue, et calculer la vitesse de véhicule du véhicule en cours de conduite en fonction de l'accélération longitudinale actuelle du véhicule et de l'information de vitesse de roue de chaque roue

4. Procédé de commande selon l'une quelconque des revendications 1 à 3, dans lequel l'étape d'acquérir la pression de freinage du véhicule en cours de conduite comprend :
détecter la pression de freinage du véhicule en cours de conduite par un capteur hydraulique fourni sur une pédale de frein du véhicule.

5. Système de commande d'auto-maintien (10), comprenant :
une unité d'acquisition de pente de route (100) configurée pour acquérir une pente de route d'un véhicule en cours de conduite ;
une unité d'acquisition de vitesse de véhicule (200) configurée pour acquérir une vitesse de véhicule du véhicule en cours de conduite ;
une unité d'acquisition de pression de freinage (300) configurée pour acquérir une pression de freinage du véhicule en cours de conduite ;
une unité d'acquisition d'information d'engrenage (400) configurée pour acquérir une information d'engrenage du véhicule en cours de conduite ;
un module de commande de stationnement (500) relié à l'unité d'acquisition de pente de route (100), à l'unité d'acquisition de vitesse de véhicule (200), à l'unité d'acquisition de pression de freinage (300) et à l'unité d'acquisition d'information d'engrenage (400), et configuré pour déterminer un scénario de conduite dans lequel se trouve actuellement le véhicule en fonction de la pente de route et de l'information d'engrenage acquises, déterminer si le véhicule satisfait à une condition d'activation de l'auto-maintien en fonction du scénario de conduite déterminé et de la vitesse de véhicule et de la pression de freinage acquises, afin d'obtenir un résultat de détermination, et générer un signal de commande correspondant en fonction du résultat de détermination ; et
une unité d'exécution (600) reliée au module de commande de stationnement (500) et
configurée pour activer ou désactiver la fonction d'auto-maintien du véhicule en fonction du signal de commande correspondant, dans lequel les scénarios de conduite comprennent une marche arrière, une conduite en montée, une conduite en palier et une conduite en descente ;
le module de commande de stationnement (500) est configuré en outre pour :
déterminer si l'information d'engrenage s'agit un engrenage R ;
si l'information d'engrenage s'agit l'engrenage R, déterminer que le scénario de conduite dans lequel se trouve actuellement le véhicule est la marche arrière ; et
si l'information d'engrenage ne s'agit pas l'engrenage R, déterminer si le scénario de conduite dans lequel se trouve actuellement le véhicule est la conduite en montée, la conduite en palier ou la conduite en descente en fonction de la pente de la route, **caractérisé en ce que**, le signal de commande correspondant comprend l'un d'un premier signal de commande indiquant l'activation de la fonction d'auto-maintien et d'un deuxième signal de commande indiquant la désactivation de la fonction d'auto-maintien ; le module de commande de stationnement (500) est configuré en outre pour :
lorsque le scénario de conduite déterminé est la marche arrière, déterminer directement que le véhicule ne satisfait pas à la condition d'activation de l'auto-maintien et générer le deuxième signal de commande ;
lorsque le scénario de conduite déterminé est la conduite en montée, déterminer si la vitesse de véhicule est inférieure à un seuil de vitesse de véhicule prédéfini et si oui, déterminer que le véhicule satisfait à la condition d'activation de l'auto-maintien et générer le premier signal de commande ;
lorsque le scénario de conduite déterminé est la conduite en palier, déterminer si la vitesse de véhicule est inférieure au seuil de vitesse de véhicule prédéfini et si la pression de freinage est supérieure à un premier seuil prédéfini, et si oui, déterminer que le véhicule satisfait à la condition d'activation de l'auto-maintien et générer le premier signal de commande ; et
lorsque le scénario de conduite déterminé est la conduite en descente, déterminer si la vitesse de véhicule est inférieure au seuil de vitesse de véhicule prédéfini et si la pression de freinage est supérieure à un deuxième seuil prédéfini, et si oui, déterminer que le véhicule satisfait à la condition d'activation de l'auto-maintien et générer le premier signal de commande, le deuxième seuil prédéfini étant supérieur au premier seuil prédéfini ;
l'unité d'exécution (600) est configurée en outre pour :
désactiver la fonction d'auto-maintien du véhicule en fonction du deuxième signal de commande : ou
activer la fonction d'auto-maintien du véhicule en fonction du premier signal de commande.

6. Système de commande (10) selon la revendication 5, dans lequel l'unité d'acquisition de pente de route (100) comprend :
un capteur de couple (101) configuré pour acquérir un couple de conduite actuel du véhicule ;
un premier capteur d'accélération (102) configuré pour acquérir une accélération longitudinale actuelle du véhicule ; et
une première calculatrice (103) configurée pour calculer la pente de route du véhicule en cours de conduite en fonction du couple de conduite et de l'accélération longitudinale acquises.

7. Système de commande (10) selon la revendication 5 ou 6, dans lequel l'unité d'acquisition de pente de route (100) est un capteur de pente (104) configuré pour détecter la pente de route du véhicule en cours de conduite.

8. Système de commande (10) selon l'une quelconque des revendications 5 à 7, dans lequel l'unité d'acquisition de vitesse de véhicule (200) comprend :
un deuxième capteur d'accélération (201) configuré pour acquérir une accélération longitudinale actuelle du véhicule ;
un capteur de vitesse de roue (202) configuré pour acquérir une information de vitesse actuelle de roue de chaque roue du véhicule ; et
une deuxième calculatrice (203) configurée pour calculer la vitesse de véhicule du véhicule en cours de conduite en fonction de l'accélération longitudinale et de l'information de vitesse de roue de chaque roue acquises.

9. Système de commande (10) selon l'une quelconque des revendications 5 à 8, dans lequel l'unité d'acquisition de pression de freinage (300) est un capteur hydraulique (301) ;
le capteur hydraulique (301) est fourni sur une pédale de frein du véhicule et configuré pour détecter la pression de freinage du véhicule en cours de conduite.

10. Système de commande (10) selon l'une quelconque des revendications 5 à 9, dans lequel l'unité d'exécution (600) est une unité d'exécution hydraulique (601) intégrée dans le module de commande de stationnement (500).
